**Europäisches Patentamt**

**European Patent Office**

**Office européen des brevets**

(19)

(11) Veröffentlichungsnummer: **0 249 014**
**A1**

(12) **EUROPÄISCHE PATENTANMELDUNG**

(21) Anmeldenummer: **87105763.4**

(22) Anmeldetag: **18.04.87**

(51) Int.Cl.³: **C 02 F 3/20**

(30) Priorität: **31.05.86 DE 8614739 U**

(43) Veröffentlichungstag der Anmeldung:
**16.12.87 Patentblatt 87/51**

(84) Benannte Vertragsstaaten:
**AT BE CH DE FR GB LI NL**

(71) Anmelder: **REHAU AG + Co**
**Rheniumhaus**
**D-8673 Rehau(DE)**

(72) Erfinder:
**Der Erfinder hat auf seine Nennung verzichtet**

(54) **Einrichtung zur Belüftung von Medien.**

(57) Die Erfindung betrifft eine Einrichtung zur Belüftung von Medien wie Gülle und dergleichen. Sie besteht aus einem langgestreckten, flexiblen Hohlelement (1) aus polymerem Werkstoff mit einem Anschluß zur Zuführung von gasförmigen Stoffen in den Hohlraum. Die Wandung des Hohlelementes weist in vorgegebenen Abständen am Umfang verteilte Durchlaßöffnungen (13) auf, die in unbelastetem Zustand geschlossen sind und sich bei zunehmender Druckbeaufschlagung des Hohlraums zum Gasauslaß öffnen. Das Kennzeichnende der Erfindung wird darin gesehen, daß die Wandung des Hohlelementes aus wenigstens zwei Schichten (11,12) aufgebaut ist. Die Innenschicht (11) besteht aus weich eingestelltem Polyvinylchlorid, die Außenschicht (12) ist eine dauerelastische Hüllschicht. Beide Schichten stehen zueinander in einem Dikkenverhältnis von 1:1 bis 1:20, vorzugsweise 1:5 bis 1:10.

Fig. 1

0249014

## NEUE SCHUTZRECHTSANMELDUNG

### Einrichtung zur Belüftung von Medien

Die Neuerung betrifft eine Einrichtung zur Belüftung von Medien, z.B. Gülle, bestehend aus einem langgestreckten, flexiblen Hohlelement aus Kunststoff mit einem Anschluß zur Zuführung von gasförmigen Stoffen in den Hohlraum, wobei die Wandung des Hohlelementes in vorgegebenen Abständen am Umfang verteilte Durchlaßöffnungen aufweist, die in unbelastetem Zustand geschlossen sind und sich bei zunehmender Druckbeaufschlagung des Hohlraums zum Gasauslaß öffnen.

Derartige Belüftungseinrichtungen von wässrigen Medien sind seit langem bekannt. Das Funktionsprinzip dieser Einrichtungen sieht einen in der Regel am Boden des Flüssigkeitsbehälters installierten Hohlkörper vor, der eine Perforation aufweist, durch deren Öffnungen das unter Druck in den Hohlkörper eingebrachte gasförmige Medium entweicht. Auf diese Weise kann z.B. stehendes Gewässer mit Sauerstoff beaufschlagt werden. Aggressive wässrige Lösungen wie Gülle können mit solchen Einrichtungen belüftet werden, was bei längerer Aufbewahrung solcher Medien erforderlich ist.

Bei der Güllebelüftung sind bisher Schläuche aus Polyvinylchlorid eingesetzt worden, in welche die Öffnungen für den Gasaustritt derart eingestochen worden sind, daß sie bei drucklosem Schlauch geschlossen bleiben und sich erst bei Druckbeaufschlagung des lichten Schlauchinnenraumes unter eben diesem Druck nach außen öffnen und somit die Auslässe für das gasförmige Medium freigeben. Insbesondere bei aggressiven Medien ergibt sich bei der Verwendung von Schläuchen aus Polyvinylchlorid der Nachteil, daß sich die äußere Oberfläche des Schlauches mit zunehmender Benutzungsdauer verhärtet.

Schuld daran ist beispielsweise im Medium Gülle der Anteil des aggressiven Ammoniaks. Dessen Aggressivität bewirkt, daß die Schlauchoberfläche in relativ kurzer Zeit verhärtet, so daß der gewünschte Schließmuskeleffekt dieser Einstichöffnungen mehr und mehr aussetzt. Die Verhärtung führt dazu, daß nach einiger Zeit der Gasdruck im Inneren des Schlauches nicht mehr ausreicht, um die verhärteten Außenregionen zu öffnen. Damit wird der Schlauch als Belüftungselement unbrauchbar.

Hier setzt die Neuerung ein, die es sich zur Aufgabe gestellt hat, die Nachteile des bekannten Standes der Technik zu vermeiden und eine Einrichtung zur Belüftung von Medien wie Gülle und dergleichen anzugeben, die auf längere Zeitdauer funktionsfähig bleibt. Neuerungsgemäß wird dazu vorgeschlagen, daß die Wandung des Hohlelementes aus wenigstens zwei Schichten aufgebaut ist, von denen die innere Schicht aus weich eingestelltem Polyvinylchlorid besteht, welche von einer dauerelastischen äußeren Hüllschicht umgeben ist, die zur inneren Schicht in einem Dickenverhältnis von 1:1 bis 1:20, vorzugsweise von 1:5 bis 1:10 steht.

Das Hohlelement ist vorteilhaft ein Mehrschichtenschlauch, kann aber auch ein Hohlkammerprofil beliebigen Querschnitts sein. Wesentlich ist nur, daß die Flexibilität gegeben ist, was durch die Verwendung von weich eingestelltem Polyvinylchlorid als Innenschlauch und dauerelastischen äußeren Hüllschichten gewährleistet erscheint.

Wenn ein Hohlkammerprofil als Hohlelement verwendet wird, so besteht die Möglichkeit, dieses aus mehreren, längsverlaufenden und durch Wandungen voneinander abgetrennten Einzelhohlkammern aufzubauen. Auf diese Weise können verschiedene Gase in einem Arbeitsgang in das Medium, beispielsweise Gülle, eingebracht werden.

Blatt 3                                    **0249014**

Wichtig ist im Rahmen der Neuerung, daß die Hüllschicht aus einem Kunststoff besteht, welcher mit der Innenschicht eine bleibende Verbindung eingeht. Die Hüllschicht besteht zweckmäßigerweise aus chloriertem Polyaethylen.

Hierfür ist noch wesentlich, daß die Durchlaßöffnungen sowohl die Hüllschicht als auch die Innenschicht durchdringen.

Das neuerungsgemäße Hohlelement wird derart erzeugt, daß zunächst im Wege der Extrusion die Innenschicht als Schlauch oder Hohlprofil erzeugt wird. Im Koextrusionsverfahren wird auf diese Innenschicht die äußere Hüllschicht aufgespritzt, wobei hier das Dickenverhältnis vorteilhaft bei 1:5 bis 1:6 gewählt wird. Es liegt jedoch im Rahmen der Neuerung, die Dicken auch im Verhältnis von 1:1 bis 1:20 auszuwählen.

Mit der wenigstens gleich dicken Innenschicht ist im ersten Extrusionsschritt ein idealer Träger für die unmittelbar danach im Koextrusionsverfahren aufzubringende äußere Hüllschicht geschaffen.

Wählt man die als Vorteil angegebene Materialkombination, nämlich Polyvinylchlorid weich, für die Innenschicht und chloriertes Polyaethylen für die äußere Hüllschicht, so kann im Koextrusionsverfahren unter Ausnutzung der Extrusionswärme eine vollflächige Umfangsverschweißung der beiden Schichten derart erfolgen, daß eine Ablösung der einen Schicht von der anderen unmöglich ist.

Nach Beendigung des Fertigungsverfahrens und Abkühlung des Hohlelementes wird dieses dem Nadelungsprozess unterzogen. Hierbei werden an definierten Stellen über den Umfang verteilt, Öffnungen in die Wandung des Hohlelementes eingestochen, wobei durch die Stechwerkzeuge sowohl die äußere Hüllschicht als auch die Innenschicht durchstoßen werden.

Blatt 4                                                    **0249014**

Nach dem Herausziehen der Stechwerkzeuge aus der Wandung des Hohlelementes schließen sich die dadurch erzeugten Öffnungen automatisch wieder aufgrund der besonderen Elastizität der für die Herstellung der Schichten verwendeten Kunststoffe.

Das Hohlelement ist nun für den Einsatz fertig. Es kann, wenn es als Schlauch hergestellt wird, nunmehr an einem Ende flüssigkeitsdicht verschlossen, z.B. verschweißt werden. Dieses Ende wird dann mit dem Hohlelement in das Medium, z.B. in die Gülle eingelegt. Das andere Ende des Hohlelementes wird aus dem Behälter herausgeführt und an eine Druckleitung angeschlossen. Bei bloßer Belüftung kann dies beispielsweise eine Druckluftleitung sein. Sollen andere gasförmige Stoffe verwendet werden, muß das herausgeführte Ende des Hohlelementes an die entsprechenden Druckgeber angeschlossen werden.

Wird nun der Innenraum des Hohlelementes mit Druck beaufschlagt, der größer sein muß als der auf dem Hohlelement lastende Druck des flüssigen Mediums, öffnen sich die Durchstichöffnungen von innen nach außen und lassen den gasförmigen Stoff in das flüssige Medium eintreten. Dort steigt er entweder nach oben - Belüftungseffekt - oder verbindet sich mit dem flüssigen Medium in chemischer Reaktion.

Wird der Gasdruck abgestellt, schließen sich die Durchstichöffnungen des Hohlelementes sofort wieder aufgrund der den verwendeten Kunststoffen eigenen Flexibilität. Hierbei ist wesentlich, daß das als äußere Hüllschicht verwendete chlorierte Polyethylen gegen die Angriffe von aggressiven Stoffen aus dem flüssigen Medium weitgehend resistent ist. So wird z.B. das chlorierte Polyethylen von dem in der Gülle befindlichen Ammoniak nicht angegriffen. Die durch die äußeren Hüllschichten gestochenen Durchlaßöffnungen behalten also auch bei längerer Benutzungsdauer ihre Flexibilität, d.h. den hier wesentlichen Schließmuskeleffekt.

**0249014**

Dies ist der Vorteil gegenüber einem Hohlelement aus weich
eingestelltem Polyvinylchlorid, bei dem durch die aggressiven
Bestandteile in dem fließfähigen Medium langsam von der Oberfläche nach innen fortlaufend die Weichmacherbestandteile des
Kunststoffes ausgewaschen werden, wodurch die zum Stand der
Technik als nachteilig geschilderte Verhärtung der Oberfläche
eintritt.

In der Zeichnung ist ein Ausführungsbeispiel des neuerungsgemäßen Hohlelementes schematisch dargestellt; es zeigt:

Fig. 1 den Querschnitt durch ein schlauchförmiges Hohlelement,

Fig. 2 den vergrößerten Querschnitt im Bereich einer Durchtrittsöffnung im geschlossenen Zustand,

Fig. 3 den vergrößerten Querschnitt einer Durchtrittsöffnung
im geöffneten Zustand.

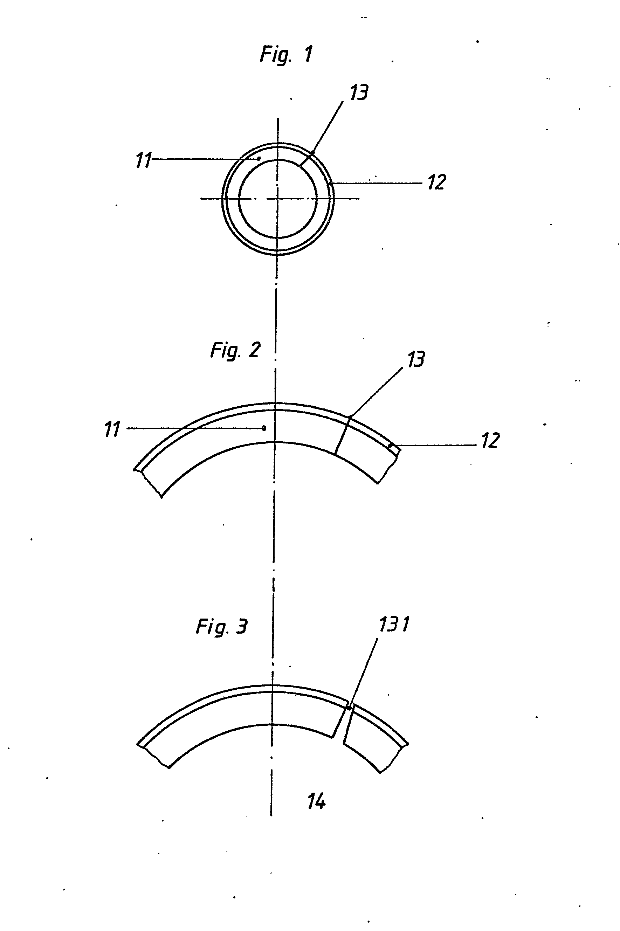

In Fig. 1 ist das Hohlelement 1 als Schlauchform im Querschnitt gezeichnet. Die Innenschicht 11 ist dabei von der äußeren Hüllschicht 12 stoffschlüssig umgeben. Durch beide
Schichten 11, 12 erstrecken sich die Durchstichöffnungen 13,
die in beliebiger Zahl in definierten Abständen voneinander am
Schlauchumfang angeordnet sein können.

Fig. 2 zeigt im vergrößerten Zustand die Innenschicht 11, sowie die äußere Hüllschicht 12 mit einer beide Schichten durchdringenden Einstichöffnung in geschlossenem Zustand.

In Fig. 3 ist die Druckbeaufschlagung des Innenraumes 14 des
Hohlelementes 1 erfolgt und die bisher geschlossene Durchstichöffnung 13 hat sich geöffnet, wodurch der Durchlaß 131
entstanden ist.

Das Aufgehen der Durchstichöffnung 13 erfolgt durch erhöhten Innendruck (in Pfeilrichtung) und wird ermöglicht durch die den verwendeten Kunststoffen innewohnende Elastizität. Durch den vom Hohlraum 14 des Hohlelementes 1 stetig nach außen strömenden Innendruck wird das flüssige Medium verhindert, über die Öffnung 131 in den Innenraum 14 einzutreten.

Die Elastizität der beiden Schichten 11 und 12 ist so groß, daß bei abnehmendem oder ausbleibendem Innendruck die Öffnung 131 sofort schließt und wieder die in Fig. 2 gezeigte Stellung einnimmt. Dieser Schließvorgang geht so schnell, daß ein Nachlaufen von flüssigem Medium in den Innenraum 14 des Hohlelementes 1 ausgeschlossen ist.

- SCHUTZANSPRÜCHE -

SCHUTZANSPRÜCHE

1. Einrichtung zur Belüftung von Medien, z.B. Gülle, bestehend aus einem langgestreckten, flexiblen Hohlelement aus Kunststoff mit einem Anschluß zur Zuführung von gasförmigen Stoffen in den Hohlraum, wobei die Wandung des Hohlelementes in vorgegebenen Abständen am Umfang verteilte Durchlaßöffnungen aufweist, die in unbelastetem Zustand geschlossen sind und sich bei zunehmender Druckbeaufschlagung des Hohlraums zum Gasauslaß öffnen, dadurch gekennzeichnet, daß die Wandung des Hohlelementes (1) aus wenigstens zwei Schichten (11, 12) aufgebaut ist, von denen die Innenschicht (11) aus weich eingestelltem Polyvinylchlorid besteht, welche von einer dauerelastischen äußeren Hüllschicht (12) umgeben ist, die zur Innenschicht (11) in einem Dickenverhältnis von 1:1 bis 1:20, vorzugsweise 1:5 bis 1:10 steht.

2. Einrichtung nach Anspruch 1, dadurch gekennzeichnet, daß das Hohlelement (1) ein Mehrschichtenschlauch ist.

3. Einrichtung nach Anspruch 1, dadurch gekennzeichnet, daß das Hohlelement (1) ein Hohlkammerprofil ist.

4. Einrichtung nach Anspruch 3, dadurch gekennzeichnet, daß das Hohlkammerprofil aus mehreren, längsverlaufenden und durch Wandungen voneinander abgetrennten Einzelhohlkammern besteht.

5. Einrichtung nach Anspruch 1, dadurch gekennzeichnet, daß die Hüllschicht (12) aus einem Kunststoff besteht, welcher mit der Innenschicht (11) eine bleibende Verbindung eingeht.

**0249014**

6. Einrichtung nach Anspruch 5, dadurch gekennzeichnet, daß die Hüllschicht aus chloriertem Polyaethylen besteht.

7. Einrichtung nach einem oder mehreren vorangegangenen Ansprüchen, dadurch gekennzeichnet, daß die Durchlaßöffnungen (13) sowohl die Innenschicht (11) als auch die Hüllschicht (12) durchdringen.

1|1

0249014

Fig. 1

13

11

12

Fig. 2

13

11

12

Fig. 3

131

14

**Europäisches Patentamt**

**EUROPÄISCHER RECHERCHENBERICHT**

Nummer der Anmeldung

0249014

EP 87 10 5763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 224 177 (GUMMI-JÄGER) <br><br> * Seite 1, Ansprüche 1-5; Seite 2, letzter Absatz - Seite 5 * | 1,2,5, 7 | C 02 F 3/20 |
| | --- | | |
| A | CH-A- 479 492 (E. KELLER) <br> * Spalte 1, Zeilen 1-3; Spalte 1, Zeile 29 - Spalte 3, Zeile 4; Patentanspruch; Unteransprüche 1,3,4 * | 1-4 | |
| | --- | | |
| A | DE-A-2 513 547 (A. SCHREIBER) <br><br> * Seite 10, Ansprüche 1,2; Seite 4, Absatz 2 * | 1,3,5, 7 | |
| | --- | | |
| A | EP-A-0 028 728 (R. MESSNER) <br> * Seite 12, Ansprüche 1,9 * | 1 | RECHERCHIERTE SACHGEBIETE (Int. Cl.4) |
| | ----- | | C 02 F <br> B 01 F <br> C 12 M |

Der vorliegende Recherchenbericht wurde für alle Patentansprüche erstellt.

| Recherchenort <br> DEN HAAG | Abschlußdatum der Recherche <br> 08-09-1987 | Prüfer <br> TEPLY J. |
|---|---|---|